# EUROPÄISCHE PATENTSCHRIFT

(11) **EP 0 482 226 B1**
(45) Veröffentlichungstag und Bekanntmachung des Hinweises auf die Patenterteilung: **25.05.1994**
(21) Anmeldenummer: 90120220.0
(22) Anmeldetag: 22.10.1990
(51) Int. Cl.: H02K 19/20, F02N 11/04

(54) **Nach dem Reluktanz-Prinzip arbeitender Motor und/oder Generator**
Motor and/or generator operating according to the reluctance principle
Moteur et/ou générateur fonctionnant selon le principe de la réluctance

(43) Veröffentlichungstag der Anmeldung: 29.04.1992
(73) Patentinhaber: SIEMENS AKTIENGESELLSCHAFT, 80333 München (DE)
(72) Erfinder: Winter, Udo, Dr. Ing., W-8702 Kürnach (DE); Weinhold, Wolfgang, M. Sc. Dipl.-Ing., W-8700 Würzburg (DE); Schmidt, Helmuth, Dipl.-Ing., W-8701 Reichenberg (DE)

(56) Entgegenhaltungen:
- EP-A- 0 103 821
- DE-C- 726 190
- FR-A- 841 103
- US-A- 4 584 513

## Beschreibung

Die Erfindung bezieht sich auf einen nach dem Reluktanz-Prinzip arbeitenden Motor und/oder Generator gemäß Oberbegriff des Anspruchs 1; ein derartiger Motor und/oder Generator ist aus der EP-B1-0 103 821 bekannt.

Bei dem bekannten vorgenannten Motor und/oder Generator mit Schwungmassen-Rotor besteht der Stator aus über den Umfang des Rotors im tangentialen Abstand zueinander verteilt angeordneten, magnetisch voneinander getrennten Sektorstatoren, von denen jeder aus zumindest zwei gleichartig gezahnten, in axialem Abstand und mit axial fluchtenden Zähnen hintereinander angeordneten Sektorstator-Elementen mit gemeinsamen, in den Nuten zwischen den Zähnen untergebrachten und über eine elektronische Schaltvorrichtung kommutierten Wicklungssträngen besteht. Jedes Sektorstator-Element mündet mittig zwischen seinem linken und rechten tangentialen Ende in einem radial überstehenden Polschenkel, der jeweils von einem konzentrierten Erregerwicklungsteil umschlungen ist; die Polschenkel zweier axial hintereinander angeordneter Sektorstator-Elemente eines Sektorstators sind im Sinne entgegengesetzter Polarität erregt und radial außen durch ein Rückschlußjoch verbunden.

Eine Reduzierung der Baugröße und eine universellere Einbaumöglichkeit eines Stators und/oder Generators der vorgenannten Art kann bei gewährleisteter voller Betriebstüchtigkeit durch einen zur radialen Symmetrie-Mittellinie des Sektorstators seitlichen Winkelversatz der Polschenkel erreicht werden. Durch einen vorteilhafterweise zur Symmetrie-Mittellinie des Sektorstators spiegelsymmetrieschen Blechschnitt kann mit gleichen Montage- bzw. Fertigungsmitteln in Anpassung an den jeweiligen Einbauraum die Anordnung der Polschenkel entweder zur linken oder zur rechten Seite versetzt von der Symmetrie-Mittellinie erfolgen.

Nach einer Ausgestaltung der Erfindung sind die Polschenkel als diskrete Bauteile jeweils gegen eine korrespondierende Auflagefläche des Blechpaketes des Sektorstators angelegt, wobei in montagetechnisch besonders einfacher Weise die Polschenkel und/oder das Rückschlußjoch durch eine am Sektorstator fixierbare Bügelfeder gegen die Auflagefläche angedrückt werden.

Die Erfindung sowie weitere vorteilhafte Ausgestaltungen gemäß Merkmalen der Unteransprüche werden im folgenden anhand eines schematisch dargestellten Ausführungsbeispiels in der Zeichnung näher erläutert; darin zeigen:
- FIG 1: eine stirnseitige Draufsicht auf einen Sektorstator
- FIG 2: im Teilausschnitt den Sektorstator gemäß FIG 1 im Schnittverlauf II-II.

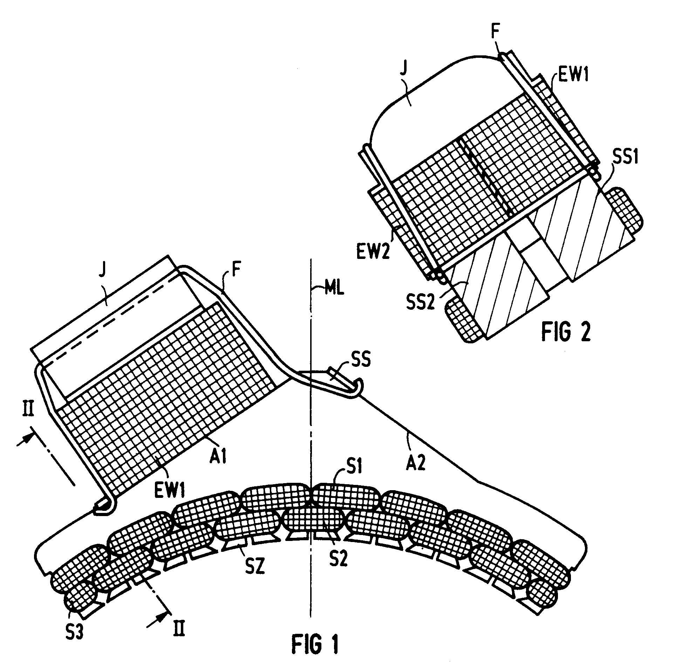

FIG 1 zeigt in einer axialen stirnseitigen Draufsicht einen einzelnen Sektorstator SS, der z.B. an dem Motor-Kurbelgehäuse einer Kraftfahrzeug-Verbrennungsmaschine befestigt ist und sich über einen Winkel von hier ca. 70° der als Rotor mitbenutzten Kupplungsscheibe der Verbrennungsmaschine erstreckt. Der Sektorstator SS besteht, wie insbesondere aus FIG 2 ersichtlich, aus zwei hintereinander in axialem Abstand magnetisch gegeneinander isolierten Sektorstator-Elementen SS1 bzw. SS2. Jedes Sektorstator-Element SS1 bzw. SS2 ist mit Statorzähnen SZ versehen. Als Stator-Arbeitswicklung ist eine mehrsträngige Wicklung mit elektrisch gegeneinander versetzten Wicklungssträngen S1;S2 gleicher Spulenweite vorgesehen, wobei zur vollen Ausnutzung des Sektorstators in vorteilhafter Weise die tangential äußersten Statorzähne je einen Wicklungsstrang S2 mit auf die Hälfte verkürzter Spulenweite aufnehmen. Auf die nähere Arbeitsweise des Motors und/oder Generators braucht hier nicht eingegangen zu werden, sie ist Gegenstand der vorbekannten EP-B1-0 103 821.

Jedes Sektorstator-Element SS1 bzw. SS2 mündet in einen radial überstehenden Polschenkel, der jeweils von einem konzentrierten Erregerwicklungsteil EW1 bzw. EW2 umschlungen und vorteilhafterweise als radial aufsteckbare Formspule ausgebildet ist. Die radial äußeren Polenden der Polsenkel PS1 und PS2 sind durch ein Rückschlußjoch J verbunden.

Erfindungsgemäß sind die Polschenkel PS1 bzw. PS2 gegenüber der Mittellinie ML des Sektorstators SS seitlich um einen bestimmten Winkel versetzt angeordnet. Die Polschenkel PS1 bzw PS2 bestehen aus diskreten Bauteilen, die nach radial innen gegen eine Auflagefläche A1 des Blechpaketes des Sektorstators SS anliegen und mittels einer das Rückschlußjoch J übergreifenden Bügelfeder F fixiert werden, die mit ihren Enden mittelbar oder unmittelbar am Blechpaket des Sektorstators S verhakt ist.

In vorteilhafter Weise ist das Blechpaket des Sektorstators SS mit zwei als Auflage für je einen Polschenkel verwendbare Flächen A1 bzw. A2 versehen, die spiegelsymmetrisch zueinander zur Symmetrie-Mittellinie ML angeordnet sind; dadurch ist es möglich entweder in Anpassung an verschiedene Einbauverhältnisse die Polschenkel PS1 bzw. PS2 mit ihren Erregerwicklungsteilen EW1 bzw. EW2 und dem Rückschlußjoch J entweder an der linken Auflagefläche A1 oder an der rechten Auflagefläche A2 anzubringen oder im Fall erhöhten Leistungsbedarfes auf beiden Auflageflächen A1 und A2 je eine Polschenkelanordnung mit Erregerwicklungsteilen und Rückschlußjoch vorzusehen.

## Patentansprüche

1. Nach dem Reluktanz-Prinzip arbeitender Motor und/oder Generator mit über den Umfang des Rotors in tangentialem Abstand zueinander verteilt angeordneten, magnetisch voneinander getrennten Sektorstatoren (SS) mit jeweils radial überstehenden, von einem konzentrierten Erregerwicklungsteil (EW1 bzw. EW2) umschlungenen und durch ein Rückschlußjoch (J) verbundenen Polschenkeln (PS1 bzw. PS2), **gekennzeichnet durch** eine zur radialen Symmetrie-Mittellinie (ML) des Sektorstators (SS) seitlich winkelversetzte Anordnung der Polschenkel (PS1 bzw. PS2).

2. Nach dem Reluktanz-Prinzip arbeitender Motor und/oder Generator nach Anspruch 1, **dadurch gekennzeichnet,** daß die Polschenkel (PS1 bzw. PS2) als diskrete Bauteile jeweils gegen eine korrespondierende Auflagefläche (A1 bzw. A2) des Sektorstators (SS) angelegt sind.

3. Nach dem Reluktanz-Prinzip arbeitender Motor und/oder Generator nach Anspruch 1 bzw. 2, **dadurch gekennzeichnet,** daß die Polschenkel (PS1 bzw. PS2) und/oder das Rückschlußjoch (J) durch eine am Sektorstator (SS) fixierbare Bügelfeder (F) gegen die Auflagefläche (A1 bzw. A2) anlegbar sind.

4. Nach dem Reluktanz-Prinzip arbeitender Motor und/oder Generator nach einem der Ansprüche 1 bis 3, **gekennzeichnet durch** je Sektorstator (SS) beidseitig seiner Symmetrie Mittellinie (ML) winkelversetzte jeweils durch ein Rückschlußjoch verbundene Polschenkelpaare.

5. Nach dem Reluktanz-Prinzip arbeitender Motor und/oder Generator nach einem der Ansprüche 1 bis 4, **gekennzeichnet durch** einen zur Symmetrie-Mittellinie (ML) des Sektorstators (SS) spiegelsymmetrischen Blechschnitt.

## Claims

1. Motor and/or generator functioning according to the reluctance principle, having sector stators (SS) magnetically separated from one another and distributed over the circumference of the rotor tangentially spaced apart with respect to each other, and respectively having radially projecting pole shanks (PS1 or PS2) wrapped by a concentrated exciter coil part (EW1 or EW2) and connected by a short-circuit yoke (J), characterised by an arrangement of the pole shanks (PS1 or PS2) which is laterally angle-offset with respect to the radial centre line (ML) of symmetry of the sector stator (SS).

2. Motor and/or generator according to claim 1, functioning according to the reluctance principle, characterised in that the pole shanks (PS1 or PS2) are discrete components placed respectively against a corresponding support surface (A1 or A2) of the sector stator (SS).

3. Motor and/or generator according to claim 1 or 2, functioning according to the reluctance principle, characterised in that the pole shanks (PS1 or PS2) and/or the short-circuit yoke (J) can be placed against the support surface (A1 or A2) by a fastening spring (F) which can be secured on the sector stator (SS).

4. Motor and/or generator according to one of claims 1 to 3, functioning according to the reluctance principle, characterised by pairs of pole shanks for each sector stator (SS) being offset at an angle on both sides of its centre line (ML) of symmetry and connected in each case by a short-circuit yoke (J).

5. Motor and/or generator according to one of claims 1 to 4, functioning according to the reluctance principle, characterised by a sheet metal cut-out having mirror-image symmetry with respect to the centre line (ML) of symmetry of the sector stator (SS).

## Revendications

1. Moteur et/ou générateur fonctionnant selon le principe de la réluctance comportant des stators sectoriels (SS) répartis sur la périphérie du rotor avec un écart tangentiel les uns par rapport aux autres, séparés magnétiquement les uns des autres, comportant chacun des branches polaires (PS1 et PS2) qui font chacune saillie radialement, qui sont entourées d'une partie concentrée formant un enroulement d'excitation (EW1 ou EW2), et qui sont reliées par une culasse de retour, caractérisé en ce que les branches polaires (PS1 et PS2) sont décalées angulairement latéralement par rapport à la médiatrice radiale de symétrie (ML) du stator (SS) sectoriel.

2. Moteur et/ou générateur fonctionnant selon le principe de la réluctance selon la revendication 1, caractérisé en ce que les branches polaires (PS1 et PS2) sont appuyées chacune en tant que pièce distincte sur une surface d'appui (A1 et A2) correspondante du stator sectoriel (SS).

3. Moteur et/ou générateur fonctionnant selon le principe de la réluctance selon la revendication 1 ou 2, caractérisé en ce que les branches polaires (PS1 et PS2) et/ou la culasse (J) de retour peuvent être appliquées sur la surface d'appui (A1 et A2) au moyen d'un ressort du type étrier (F) susceptible d'être fixé sur le stator sectoriel (SS).

4. Moteur et/ou générateur fonctionnant selon le principe de la réluctance selon l'une des revendications 1 à 3, caractérisé en ce qu'il comporte pour chaque stator sectoriel (SS), des paires de branches polaires décalées angulairement des deux côtés de sa médiatrice de symétrie (ML), et reliées chacune par une culasse de retour.

5. Moteur et/ou générateur fonctionnant selon le principe de la réluctance selon l'une des revendications 1 à 4, caractérisé par une découpe des tôles symétrique par rapport à la ligne médiatrice de symétrie (ML) du stator sectoriel (SS).
